(19)

Europäisches
Patentamt
European
Patent Office
Office européen
des brevets

(11)  **EP 2 034 619 A1**

(12)  **EUROPEAN PATENT APPLICATION**

(43) Date of publication:
**11.03.2009  Bulletin 2009/11**

(51) Int Cl.:
*H04B 1/707* (2006.01)    *H04L 1/00* (2006.01)

(21) Application number: **08015698.7**

(22) Date of filing: **05.09.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority:  **05.09.2007  JP 2007230661**

(71) Applicant: **NTT DoCoMo, Inc.**
**Chiyoda-ku**
**Tokyo 100-6150 (JP)**

(72) Inventors:
• **Kawamoto, Junichiro**
  **Tokyo 100-6150 (JP)**

• **Hanaki, Akihito**
  **Tokyo 100-6150 (JP)**
• **Hayashi, Takahiro**
  **Tokyo 100-6150 (JP)**
• **Goto, Yoshikazu**
  **Tokyo 100-6150 (JP)**
• **Takagi, Yukiko**
  **Tokyo 100-6150 (JP)**

(74) Representative: **HOFFMANN EITLE**
**Patent- und Rechtsanwälte**
**Arabellastrasse 4**
**81925 München (DE)**

(54)  **Radio base station and method of receiving physical control channel**

(57)    Provided are a radio base station and a method of receiving a physical control channel which are capable of achieving enhanced data-transmission efficiency of an uplink physical channel when a code division multiple access scheme is used. The radio base station includes: a correlation unit (111) configured to determine a degree of correlation between a code word transmitted from the mobile device through a physical control channel and each replica of the code word, and to then select the replica having a higher degree of correlation than a predetermined degree; an identification unit (121) configured to identify a control information piece contained in the selected replica; and a code-word replica generator (109) configured to reduce the number of the replicas when the control information piece is identified.

FIG. 2

**Description**

**BACKGROUND OF THE INVENTION**

**1. Field of the Invention**

The present invention relates to a radio base station which are included in a code division multiple access radio communication system, and which are for receiving control information from a mobile device through an uplink physical control channel. The present invention also relates to a method of receiving a physical control channel.

**2. Description of the Related Art**

Enhanced uplink (EUL), in which uplink transmission rate is enhanced, is defined by the Third Generation Partnership Project (3GPP) for reviewing and creating specifications of a third-generation cellular phone system using a code division multiple access (CDMA) scheme (see, for example, "3GPP TS 25.309 V.6.6.0 FDD Enhanced Uplink Overall description Stage 2 (Release 6)," 3GPP, March 2006).
In the EUL, physical channels such as an enhanced dedicated physical data channel (E-DPDCH) and an enhanced dedicated physical control channel (E-DPCCH) are used.
An E-DPCCH is a physical control channel for an E-DPDCH being a physical data channel, and is used for transmission of various control information pieces. Specifically, transmitted through an E-DPCCH are: a happy bit indicating whether or not a mobile device (UE) can transmit data at a higher rate than a data transmission rate allowed by a radio base station (Node B), in consideration of a data buffer and excessive transmission power of the mobile device; a retransmission sequence number (RSN) indicating a sequence number of data retransmission in response to a HARQ; and an E-DCH transport format combination indicator (E-TFCI) indicating a transmission format of the E-DCH.
Here, 1 bit, 2 bits, and 7 bits are assigned to the happy bit, the RSN, and the E-TFCI, respectively. Accordingly, a code word to be transmitted through the E-DPCCH consists of 10 bits.
The code word of 10 bits is encoded as a 30-bit bit string by using an error correcting code, more particularly, a Reed-Muller code. In addition, $2^{10}$ replicas, that is, 1024 replicas, of the code word (bit string) are generated by using a predetermined spreading code.
The radio base station acquires a correlation value between the bit string, more specifically, the code word, received from the mobile device through the E-DPCCH, and each of the replicas. Then, according to the acquired correlation values, the radio base station determines the content of a code word corresponding to the replica having the highest correlation with the received code word, as the content of the code word transmitted from the mobile device. Thus, the E-DPCCH is detected.
However, the above-described method of detecting an E-DPCCH has the following problem. Specifically, some uncertainty remains as to whether or not a bit string retransmitted in response to a HARQ actually corresponds to the bit string transmitted from the mobile device, because no CRC bit is added to the E-DPCCH.
Therefore, when data received through the E-DPDCH is to be decoded by using the E-TFCI value, and, for example, if different E-TFCIs are identified, or if RSNs are mismatched, in the initial transmission and the first retransmission in a related HARQ process, the buffer content of a HARQ needs to be deleted (as long as a pre-despread received E-DCH signal cannot be held for each retransmission). Consequently, the number of HARQ retransmission times increases. Thereby, data transmission efficiencies of the physical channels (E-DPCCH and E-DPDCH) decrease.

**SUMMARY OF THE INVENTION**

The present invention has been made in view of the above-described circumstances. An object of the present invention is to provide a radio base station and a method of receiving a physical control channel which are capable of providing enhanced data-transmission efficiency of an uplink physical channel when a code division multiple access scheme is used.
To solve the above-described problems, the present invention includes the following aspects. A first aspect of the present invention provides a radio base station (radio base station 100) which is included in a radio communication system using a code division multiple access scheme (third-generation cellular phone system 1), and which receives a control information piece (E-TFCI 13, for example) from a mobile device (mobile device 200) through an uplink physical control channel (E-DPCCH) The radio base station includes: a correlation determination unit (correlation unit 111) configured to determine a degree of correlation between a code word (code word 21) transmitted from the mobile device through the physical control channel and replicas of the code word (code-word replicas 31), and to then select the replica determined to have a higher degree of correlation than a predetermined degree; an identification unit (identification unit 121) configured to identify the control information piece contained in the replica selected by the correlation determination unit; and a code-word replica controller (code-word replica generator 109) configured to reduce the number of the replicas when the control information piece is identified by the identification unit.

With the radio base station having the above-described configuration, the number of bits of replicas of a code word is reduced when control information such as an E-TFCI is identified by the identification unit. When the number of bits of replicas of a code word is reduced, the radio base station determines the content of the received bit string (code word) from among a smaller number of the replicas. Thus, the E-DPCCH can be detected more accurately. Accordingly, with this radio base station, the number of retransmission times in response to a HARQ can be reduced. Thereby data transmission efficiencies of physical channels can be enhanced.

A second aspect of the present invention according to the first aspect provides the radio base station in which, when control information pieces (E-TFCIs 13) contained in the replicas sequentially selected by the correlation determination unit are the same, the identification unit identifies the control information pieces, which have been consecutively the same, as the control information piece transmitted from the mobile device.

A third aspect of the present invention according to the first aspect provides the radio base station in which, when control information pieces (RSNs 12) contained in the replicas sequentially selected by the correlation determination unit are coherent, the identification unit identifies the control information pieces, which have been consecutively coherent, as the control information pieces transmitted from the mobile device.

A fourth aspect of the present invention according to the first aspect provides the radio base station in which the code-word replica controller reduces the number of the replicas on the basis of the number of bits of the control information piece identified by the identification unit.

A fifth aspect of the present invention according to the first aspect provides the radio base station further including an acquiring unit (minimum SF/maximum multiplexed-code number/TTI length detector 107) configured to acquire a transmission format information piece defining a transmission format of the mobile device. In the radio base station, the code-word replica controller controls the number of the replicas on the basis of the transmission format information piece acquired by the acquiring unit.

A sixth aspect of the present invention according to the fifth aspect provides the radio base station in which the transmission format information piece contains a minimum spreading factor (minimum SF) and a maximum number of multiplexed codes (maximum number of multiplexed E-DPDCH codes) of the code word in an uplink physical data channel (E-DPDCH), and the code-word replica controller controls the number of the replicas on the basis of a combination of the minimum spreading factor and the maximum number of multiplexed codes.

A seventh aspect of the present invention according to the sixth aspect provides the radio base station in which the transmission format information piece further contains a transmission time interval (TTI) of data transmitted by the mobile device, and the code-word replica controller controls the number of the replicas on the basis of a combination of the minimum spreading factor, the maximum number of multiplexed codes, and the transmission time interval.

An eighth aspect of the present invention according to the fifth aspect provides the radio base station in which the acquiring unit acquires the transmission format information piece from a radio network control apparatus (radio network control apparatus 50) configured to control the radio base station.

A ninth aspect of the present invention according to the first aspect provides the radio base station further including: a power-ratio acquiring unit (E-DPCCH-SIR measuring unit 115) configured to acquire a desired signal-to-interference power ratio of the physical control channel; and a threshold-value controller (FA-threshold controller 123) configured to control a threshold value used for a comparison with the desired signal-to-interference power ratio. In the radio base station, when the number of the replicas is reduced, the threshold-value controller reduces the threshold value.

A tenth aspect of the present invention according to the first aspect provides the radio base station further including: a power-ratio acquiring unit configured to acquire a desired signal-to-interference power ratio of the physical control channel; and a threshold-value controller configured to control a threshold value used for a comparison with the desired signal-to-interference power ratio. In the radio base station, the threshold-value controller changes the threshold value on the basis of a transmission time interval (TTI) of data transmitted by the mobile device.

An eleventh aspect of the present invention according to the tenth aspect provides the radio base station in which, when the transmission time interval of data transmitted by the mobile device is extended, the threshold-value controller reduces the threshold value.

A twelfth aspect of the present invention according to the tenth aspect provides the radio base station in which, when the transmission time interval of data transmitted by the mobile device is shortened, the threshold-value controller increases the threshold value.

A thirteenth aspect of the present invention provides a method of receiving a physical control channel which is included in a radio communication system using a code division multiple access scheme, and which is for receiving a control information piece from a mobile device through an uplink physical control channel. The method includes the steps of: determining a degree of correlation between a code word transmitted from the mobile device through the physical control channel and each replica of the code word, and then selecting the replica having a higher degree of correlation than a predetermined degree; identifying the control information piece contained in the selected replica; and,

when the control information piece is identified, reducing the number of the replicas to be used for transmission of the control information piece.

According to the above-described aspects of the present invention, a radio base station and a method of receiving a physical control channel which are capable of providing enhanced data-transmission efficiency of an uplink physical channel when a code division multiple access scheme is used can be provided.

## BRIEF DESCRIPTION OF THE DRAWINGS

Fig. 1 is a view showing a schematic overall configuration of a radio communication system according to an embodiment of the present invention.

Fig. 2 is a functional block diagram of a radio base station according to the embodiment of the present invention.

Fig. 3 is a flowchart showing an operation flow in which the radio base station according to the embodiment of the present invention detects an E-DPCCH.

Fig. 4 is a flow chart showing an operation flow in which the radio base station according to the embodiment of the present invention changes the number of replicas on the basis of transmission format information.

Fig. 5 is a flowchart showing an operation flow in which the radio base station according to the embodiment of the present invention changes the number of the replicas when having identified an E-TFCI value.

Fig. 6 is a flowchart showing an operation flow in which the radio base station according to the present invention changes the number of the replicas when having identified a RSN.

Fig. 7 is a flowchart showing an operation flow in which the radio base station according to the embodiment of the present invention changes a desired signal-to-interference power ratio threshold value ($FA_{threshold}$) of the E-DPCCH.

Fig. 8 is a diagram showing configurations of an uplink physical data channel (E-DPDCH) and an uplink physical control channel (E-DPCCH) according to the embodiment of the present invention.

Fig. 9 is a diagram showing a configuration example of a bit string (code word space) transmitted through the E-DPCCH according to the embodiment of the present invention.

Figs. 10A to 10C are views respectively showing examples of a bit string (code word space) set in accordance with a minimum SF and a maximum number of multiplexed E-DPDCH codes.

Figs. 11A and 11B are diagrams respectively showing examples of the E-TFCIs and the RSNs which the radio base station according to the embodiment of the present invention sequentially receives.

## DESCRIPTION OF THE PREFERRED EMBODIMENT

Hereinbelow, an embodiment of the present invention will be described. Specifically, description will be given of: (1) schematic overall configuration of radio communication system; (2) functional block configuration of radio base station; (3) operations of radio base station; (4) advantageous effects; and (5) other embodiments.

In descriptions of the drawings to be given below, the same or similar portions are denoted by the same or similar reference numerals. However, it should be noted that the drawings are merely schematic, and that each dimensional proportion is different from that in practice.

Accordingly, concrete dimensions and the like should be understood on the basis of the following description. Moreover, there are naturally some differences in dimensional relationships and proportions between the drawings.

(1) Schematic Overall Configuration of Radio Communication System

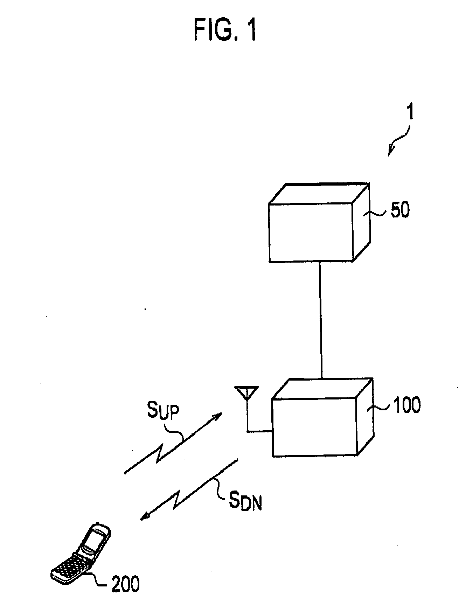

Fig. 1 is a view showing a schematic overall configuration of a radio communication system according to this embodiment, more specifically, a third-generation cellular phone system 1 using a code division multiple access (CDMA) scheme. The third-generation cellular phone system 1 conforms to a specification created by the Third Generation Partnership Project (3GPP), more specifically, enhanced uplink (EUL).

The third-generation cellular phone system 1 includes a radio network control apparatus 50, a radio base station 100, and a mobile device 200. Here, the numbers of radio base stations and mobile devices included in the third-generation mobile phone system 1 are not limited to those shown in Fig. 1.

The radio network control device 50 (RNC) performs control related to radio communications between the radio base station 100 (Node B) and the mobile device 200 (UE).

The radio base station 100 performs radio communications using the CDMA scheme. Specifically, the radio base station 100 transmits a downlink radio signal $S_{DN}$ to the mobile device 200, while the mobile device 200 transmits an uplink radio signal $S_{UP}$ to the radio base station 100.

Multiple physical channels used in the uplink are multiplexed into the uplink radio signal $S_{UP}$. Specifically, a physical control channel (E-DPCCH) and a physical data channel (E-DPDCH) in the uplink are multiplexed.

(2) Functional Block Configuration of Radio Base Station

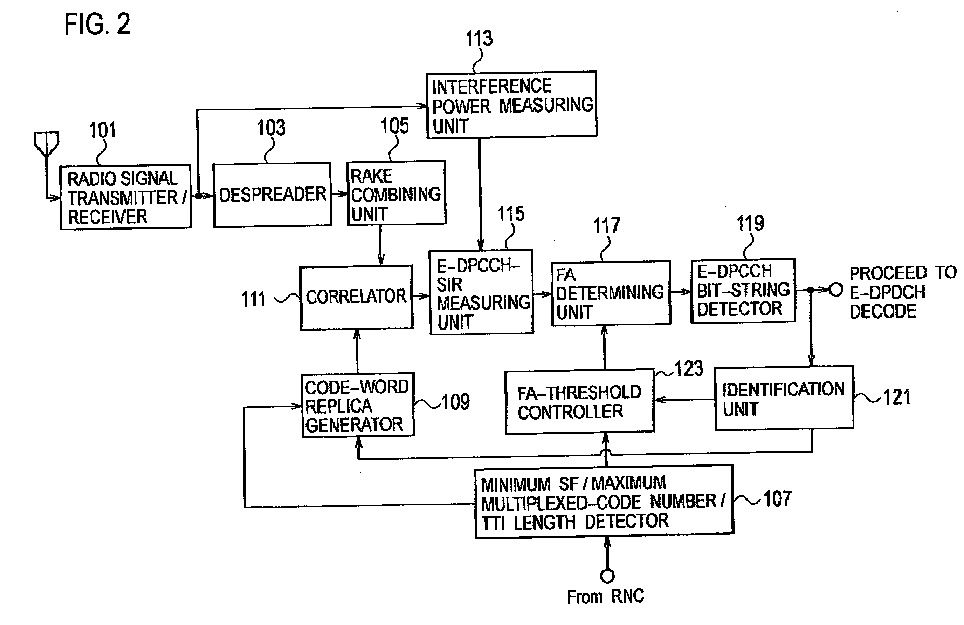

Fig. 2 is a functional block diagram of the radio base station 100. As shown in Fig. 2, the radio base station 100 includes a radio signal transmitter/receiver 101, a despreader 103, a RAKE combining unit 105, a minimum SF/ maximum multiplexed-code number/TTI length detector 107, a code-word replica generator 109, a correlator 111, an interference power measuring unit 113, an E-DPCCH-SIR measuring unit 115, an FA determining unit 117, an E-DPCCH bit-string detector 119, an identification unit 121, and a FA-threshold controller 123.

In the following, units related to the present invention will mainly be described below. Accordingly, it should be noted that the radio base station 100 may have function blocks (such as a power supply) which are not included in Fig. 2, or explanations of which are omitted herein.

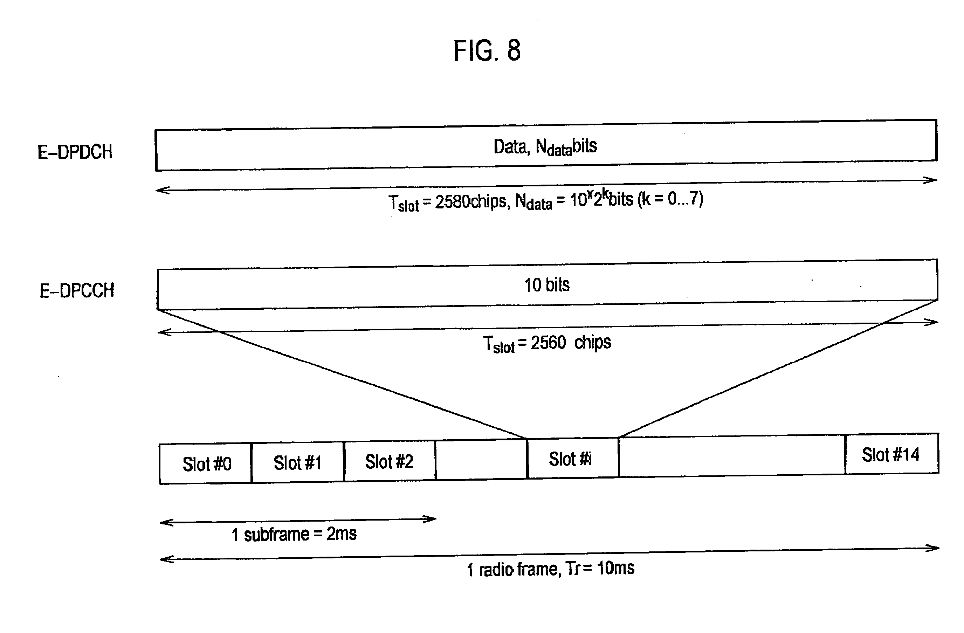

The radio signal transmitter/receiver 101 transmits the downlink signal $S_{DN}$ to the mobile device 200, and receives the uplink radio signal $S_{UP}$ from the mobile device 200. Fig. 8 shows configurations of physical channels multiplexed into the uplink radio signal $S_{UP}$.

Specifically, Fig. 8 shows configurations of the uplink physical data channel (E-DPDCH) and the uplink physical control channel (E-DPCCH). As shown in Fig. 8, the E-DPCCH is an uplink control channel accompanying the E-DPDCH. The radio base station 100 (radio signal transmitter/receiver 101) receives various control information pieces from the mobile device 200 through the E-DPCCH.

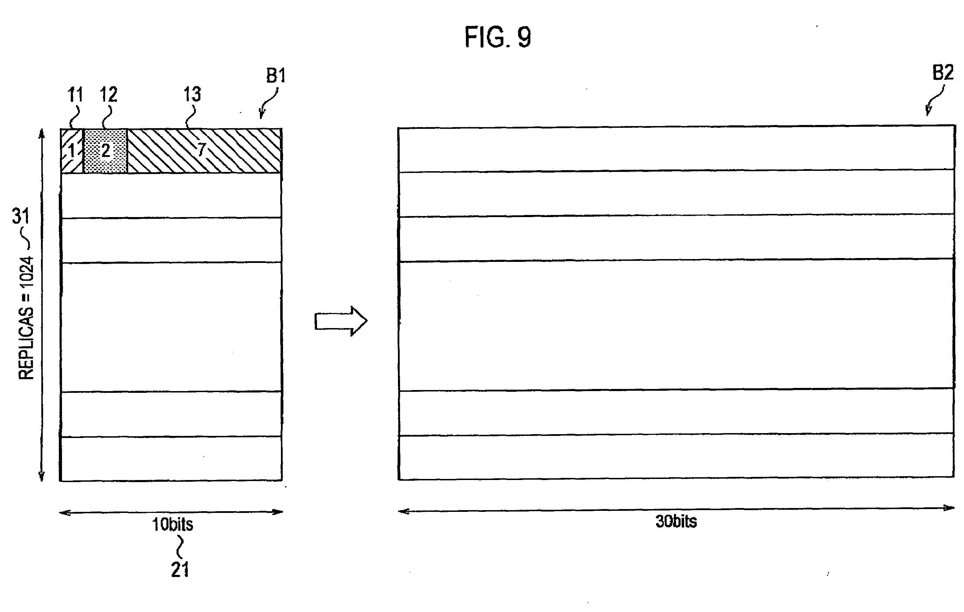

The despreader 103 despreads a received signal outputted from the radio signal transmitter/receiver 101, in synchronization with code-word replicas 31 (not shown in Fig. 2, see Fig. 9). By despreading the received signal, the despreader 103 separates the received signal into those received through multiple paths.

The RAKE combining unit 105 outputs a signal (signal Z) resulting from RAKE combining performed after correction of the phases of the signals received through the multiple paths separated by the despreader 103.

The minimum SF/maximum multiplexed-code number/TTI length detector 107 acquires transmission format information determining a transmission format of the mobile device 200. In this embodiment, the minimum SF/maximum multiplexed-code number/TTI length detector 107 serves as an acquiring unit.

Specifically, the minimum SF/maximum multiplexed-code number/TTI length detector 107 acquires a minimum SF, a maximum number of multiplexed E-DPDCH codes, and a TTI. Here, an E-TFS size can be uniquely determined on the basis of the minimum SF, the maximum number of multiplexed E-DPDCH codes and the TTI.

The code-word replica generator 109 generates the code-word replicas 31, which are replica signals of a code word 21. Specifically, the code-word replica generator 109 generates $2^{10}$ code-word replicas 31, that is, 1024 code-word replicas 31, at the maximum, for the code word 21 consisting of 10 bits.

The code-word replica generator 109 reduces the number of code-word replicas 31 to generate when the identification unit 121 succeeds in identifying control information. In other words, when the identification unit 121 can identify control information to be contained in the code-word replicas 31, the code-word replica generator 109 reduces the number of the code word replicas 31 to generate, to smaller than 1024.

In this embodiment, the code-word replica generator 109 reduces the number of the code-word replicas 31 in accordance with the number of bits (7 bits) of control information (an E-TFCI 13, for example) identified by the identification unit 121. For example, when the E-TFCI 13 is identified, the number of code-word replicas 31 is reduced from 1024 ($2^{10}$) to 8 ($2^3$).

Alternatively, the code-word replica generator 109 can control the number of the code-word replicas 31 to generate, on the basis of the transmission format information of the mobile device 200 acquired by the minimum SF/ maximum multiplexed-code number/TTI length detector 107, instead. Specifically, the code-word replica generator 109 controls the number of the code-word replicas 31 on the basis of the combination of the minimum spreading factor (minimum SF) of the code word 21 and the maximum number of multiplexed E-DPDCH codes.

Moreover, the code-word replica generator 109 can control the number of the code-word replicas 31 also on the basis of the combination of the minimum SF, the maximum number of multiplexed E-DPDCH codes, and the transmission time interval (TTI).

The correlator 111 detects a correlation between the bit string contained in the signal Z, more specifically, the code word, outputted from the RAKE combining unit 105 and each of the multiple code-word replicas 31.

Fig. 9 is a diagram showing a configuration example of the bit string (code-word space) transmitted through the E-DPCCH. As shown in Fig. 9, a bit string B1 includes the code word 21 consisting of 10 bits. The code word 21 is used for transmission of various control information pieces, such as a happy bit 11, a RSN 12, and the E-TFCI 13.

The happy bit 11 is used for notification, from the mobile device 200 to the radio base station 100, of whether or not the mobile device 200 can transmit data at a higher rate than a data transmission rate allowed by the radio base station 100, the notification made in consideration of a data buffer and excessive transmission power of the mobile device 200. Here, a single bit is used to represent the happy bit 11.

The RSN 12 (retransmission sequence number) indicates a sequence number of data retransmission in response to a HARQ. Here, 2 bits are used to represent the RSN 12.

The E-TFCI 13 (E-DCH transport format combination indicator) indicates a transmission format of the enhanced dedicated channel (E-DCH). Here, 7 bits are used to represent the E-TFCI 13.

In this embodiment, the code word 21 consisting of 10 bits is encoded as a 30-bit bit string B2 by using a Reed-Muller code.

The correlator 111 determines the degree of correlation between the bit string B1 transmitted from the mobile device 200 and each of the code-word replicas 31. The correlator 111 selects the code-word replica 31 which has a higher degree of correlation with the bit string B1 than a predetermine degree, more specifically, which has the highest degree of correlation with the bit string B1. The correlator 111 determines the content of the code word corresponding to the selected code-word replica 31, that is, the code-word replica 31 ranked highest in the correlation ranking, as the content of the code word 21 transmitted from the mobile device 200. Thus, the E-DPCCH is detected.

The interference-power measuring unit 113 measures the interference power of the uplink radio signal $S_{UP}$ received at the radio signal transmitter/receiver 101. In particular, the interference-power measuring unit 113 measures the interference power of the E-DPCCH, in this embodiment. Then, the interference-power measuring unit 113 notifies the E-DPCCH-SIR measuring unit 115 of the measured interference-power value of the E-DPCCH.

The E-DPCCH-SIR measuring unit 115 acquires a desired signal-to-interference power ratio (SIR) of the E-DPCCH. Specifically, the E-DPCCH-SIR measuring unit 115 calculates the SIR of the E-DPCCH on the basis of the interference power value of the E-DPCCH notified by the interference-power measuring unit 113. The E-DPCCH-SIR measuring unit 115 notifies the FA determining unit 117 of the acquired SIR.

The FA determining unit 117 determines whether or not the SIR of the E-DPCCH notified by the E-DPCCH-SIR measuring unit 115 exceeds a threshold value (false alarm threshold). If the SIR of the E-DPCCH exceeds the threshold value, the FA determining unit 117 instructs the E-DPCCH bit-string detector 119 to detect the bit string received through the E-DPCCH. By contrast, if the SIR of the E-DPCCH is equal to or lower than the threshold value, the FA determining unit 117 determines that no uplink physical channel (E-DCH) is transmitted.

The E-DPCCH bit string detector 119 detects the content of the bit string received through the E-DPCCH.

The identification unit 121 identifies control information contained in the bit string detected by the E-DPCCH bit-string detector 119. Specifically, when the E-TFCI 13 contained in the bit string is the same for two consecutive times, the identification unit 121 identifies the value of the E-TFCI 13 (see Fig. 9), which has been the same for the consecutive times, as the value of the E-TFCI transmitted from the mobile device 200.

Moreover, when the value of the RSN 12 (see Fig. 9) contained in the bit string is consecutively coherent, the identification unit 121 identifies the values of the RSNs, which has been consecutively coherent, as the values of the RSNs transmitted from the mobile device 200. More detailed description of identification methods of the E-TFCI and the RSN will be given later.

The FA-threshold controller 123 controls the threshold value (false alarm threshold) used for comparison with the desired signal-to-interference power ratio of the E-DPCCH. In particular, the FA-threshold controller 123 reduces the threshold value when the number of the code-word replicas 31 is reduced, in this embodiment.

Moreover, the FA-threshold controller 123 reduces the threshold value when the TTI of data transmitted from the mobile device 200 is extended. Furthermore, the FA-threshold controller 123 increases the threshold value when the TTI is shortened.

(3) Operations of Radio Base Station

Next, operations of the radio base station 100 will be described. Specifically, description will be given of: (3.1) operation of detecting E-DPCCH; (3.2) operation of changing number of replicas by using transmission format information; (3.3) operation of changing number of replicas through control information identification; and (3.4) operation of changing desired signal-to-interference power ratio threshold.

(3.1) Operation of detecting E-DPCCH

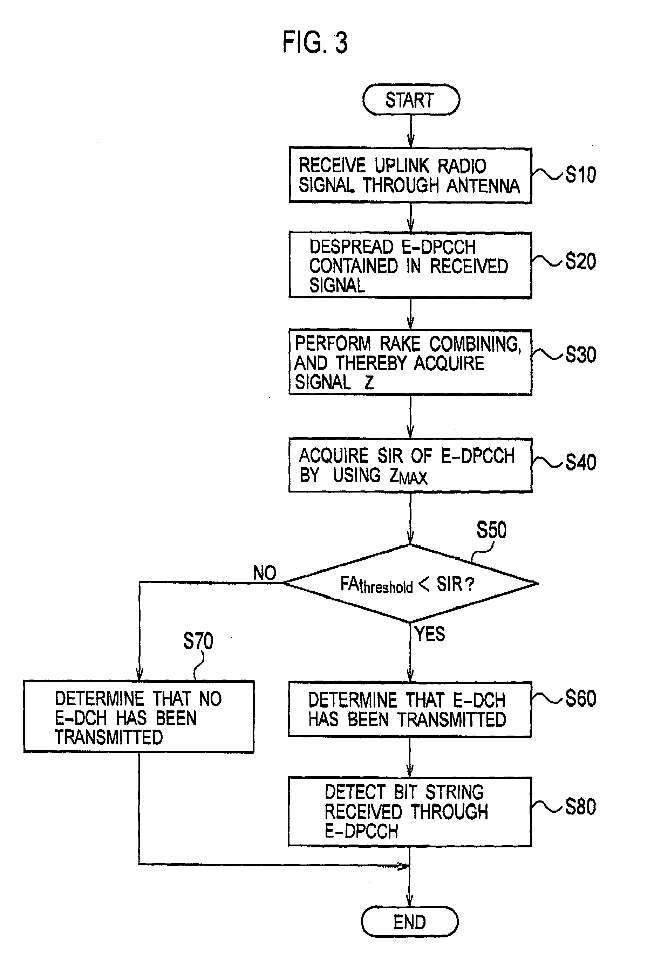

Fig. 3 shows an operation flow in which the radio base station 100 detects the E-DPCCH. As shown in Fig. 3, in step S10, the radio base station 100 receives an uplink radio signal $S_{UP}$ from the mobile device 200 through an antenna (not shown) .

In step S20, the radio base station 100 despreads the E-DPCCH contained in the received signal. Specifically, the radio base station 100 despreads the received signal in synchronization with the code-word replicas 31.

In step S30, the radio base station 100 performs RAKE combining of the received signal, and thereby acquires a signal Z. Specifically, the radio base station 100 calculates z[n], which is an output signal after RAKE combining, by using (Expression 1).

$$z[n] = \sum_{k=0}^{Finger-1} c_k^* \cdot r_k[n] \qquad \text{(Expression 1)}$$

Here, $r_k[n]$ indicates the despreading code of the k-th path, and $c_k$ indicates a channel estimation value of the k-th path. In addition, n indicates E-DPCCH transmission symbol index number in one sub-frame (i.e. n = 0, ..., 29) (see Fig. 8).

In step S40, the radio base station 100 acquires a desired signal-to-interference power ratio (SIR) of the E-DPCCH by using a maximum value $Z_{MAX}$ of correlation values $z_{corr}$ between the bit string contained in the signal Z and the respective multiple code-word replicas 31. Here, the correlation values $z_{corr}$ are each calculated by using (Expression 2) (when the TTI is 2 ms).

$$z_{corr}[i] = \frac{1}{30} \sum_{n=0}^{29} z[n] \cdot t_i[n] \qquad \text{(Expression 2)}$$

Here, $t_i[n]$ indicates a code-word replica string (code-word replica 31) of the E-DPCCH (where i = 0, ..., $TR_{max}$ - 1, $TR_{max}$ is E-TFS size × 8, and the E-TFS size is different for each combination of a minimum SF and a maximum number of multiplexed E-DPDCH codes). When the TTI is 10 ms, a correlation value $z_{corr}$ is calculated for each sub-frame, and the mean value of the multiple sub-frames in the TTI (5 sub-frames) is set to be a correlation value $Z_{corr}$ of the TTI.

The desired signal-to-interference power ratio of the E-DPCCH is calculated by using (Expression 3).

$$[SIR_{E-DPCCH}]_{true} = \frac{\{Re[MAX[z_{corr}[i]]]\}^2}{\sigma_{chip}^2 \times SF_{E-DPCCH} \times \sum_{k=0}^{Finger-1} |c_k|^2} \qquad \text{(Expression 3)}$$

Here, σ chip indicates a noise level per chip measured in a digital domain, and $SIR_{E-DPCCH}$ (unit: dB) indicates a DTX threshold factor ($FA_{threshold}$).

In step S50, the radio base station 100 determines whether or not the obtained SIR of the E-DPCCH is higher than the threshold value ($FA_{threshold}$).

If the SIR of the E-DPCCH is higher than the threshold value (YES in step S50), the radio base station 100 determines that the E-DCH is transmitted from the mobile device 200, in step S60.

On the other hand, if the SIR of the E-DPCCH is equal to or lower than the threshold value (NO in step S50), the radio base station 100 determines that no E-DCH is transmitted from the mobile device 200, in step S70.

In step S80, the radio base station 100 detects the content of the bit string received through the E-DPCCH.

Specifically, the radio base station 100 sets an index number satisfying MAX[$z_{corr}[i]$] of the correlation values $z_{corr}[i]$ to be $i_{corr\_max}$, and determines the code-word replica string $xi_{corr\_max}[m]$ (where m = 0, ..., 9) of the E-DPCCH before a second order Reed-Muller encoding corresponding to the code-word replica string $ti_{corr-max}$ of the E-DPCCH, as the code word of the E-DPCCH in the received TTI.

(3.2) Operation of Changing Number of Replicas by using Transmission Format Information

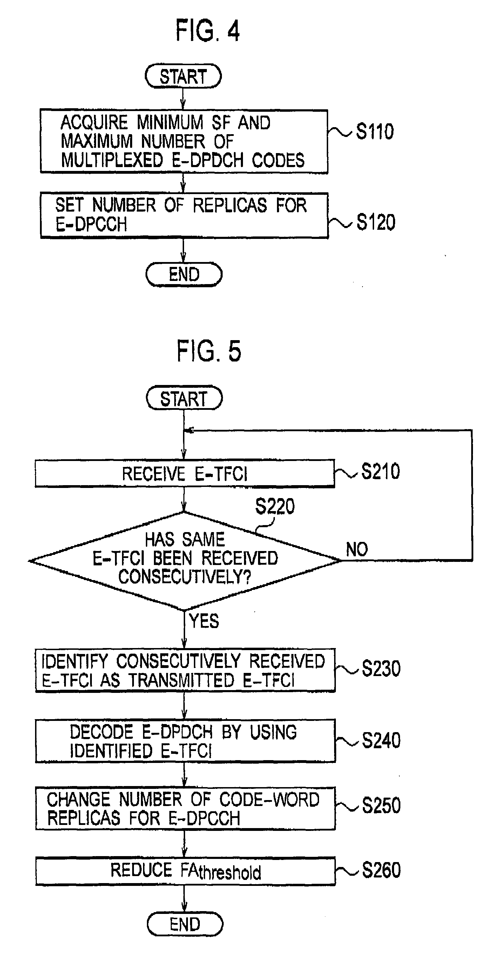

Fig. 4 shows an operation flow in which the radio base station 100 changes the number of code-word replicas on the basis of transmission format information.

As shown in Fig. 4, in step S110, the radio base station 100 acquires transmission format information, that is, a minimum SF and the maximum number of multiplexed E-DPDCH codes.

In step S120, the radio base station 100 sets the number of code-word replicas 31 for the E-DPCCH on the basis of the acquired minimum SF and maximum number of multiplexed E-DPDCH codes.

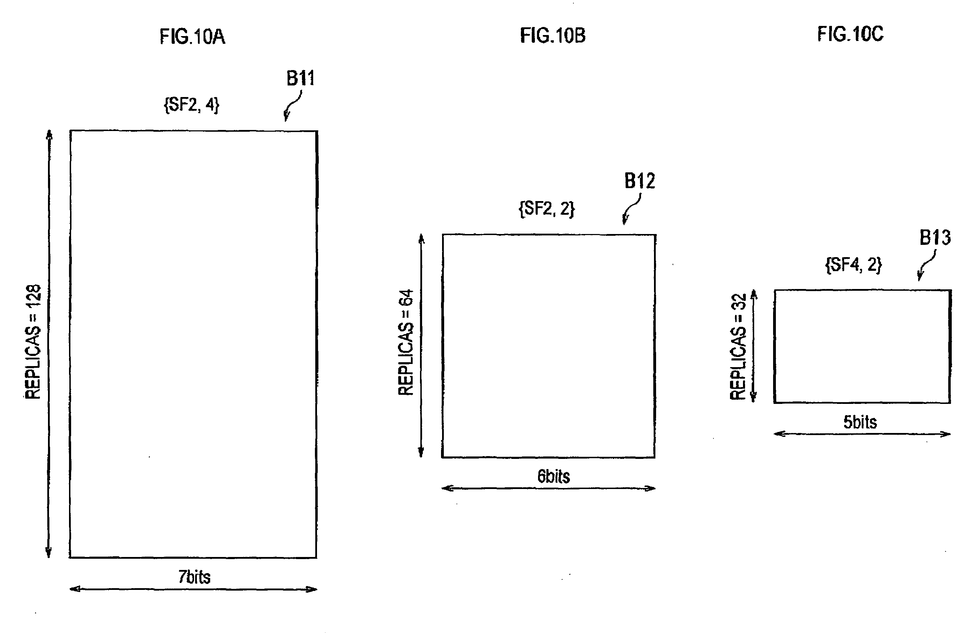

Figs. 10A to 10C show examples of a bit string (code-word space) to be set in accordance with the minimum SF and the maximum number of multiplexed E-DPDCH codes. Fig. 10A shows a bit string B11 when the minimum SF is 2 and the maximum number of multiplexed E-DPDCH codes is 4. In this case, the number of code-word replicas 31 is set at 128.

Fig. 10B shows a bit string B12 when the minimum SF is 2 and the maximum number of multiplexed E-DPDCH codes is 2. In this case, the number of code-word replicas 31 is set at 64. Fig. 10C shows a bit string B13 when the minimum SF is 4 and the maximum number of multiplexed E-DPDCH codes is 2. In this case, the number of code-word replicas 31 is set at 32.

Here, since the E-TFS size is uniquely determined by the minimum SF, the maximum number of multiplexed E-DPDCH codes, and the TTI, the radio base station 100 may set the number of the code-word replicas 31 on the basis of the minimum SF, the maximum number of multiplexed E-DPDCH codes, and the TTI value.

<u>(3.3) Operation of Changing Number of Replicas through Control Information Identification</u>

Next, an operation of changing the number of code-word replicas when the radio base station 100 identifies control information will be described. Specifically, description will be give of an operation of changing the number of code-word replicas when the radio base station 100 identifies an E-TFCI value or a RSN value.

<u>(3.3.1) E-TFCI</u>

Fig. 5 shows an operation flow for changing the number of code-word replicas when the radio base station 100 identifies an E-TFCI value.

As shown in Fig. 5, in step S210, the radio base station 100 receives the E-TFCI 13 (see Fig. 9) through the E-DPCCH.

In step S220, the radio base station 100 determines whether or not an E-TFCI having the same value has been received for two consecutive times.

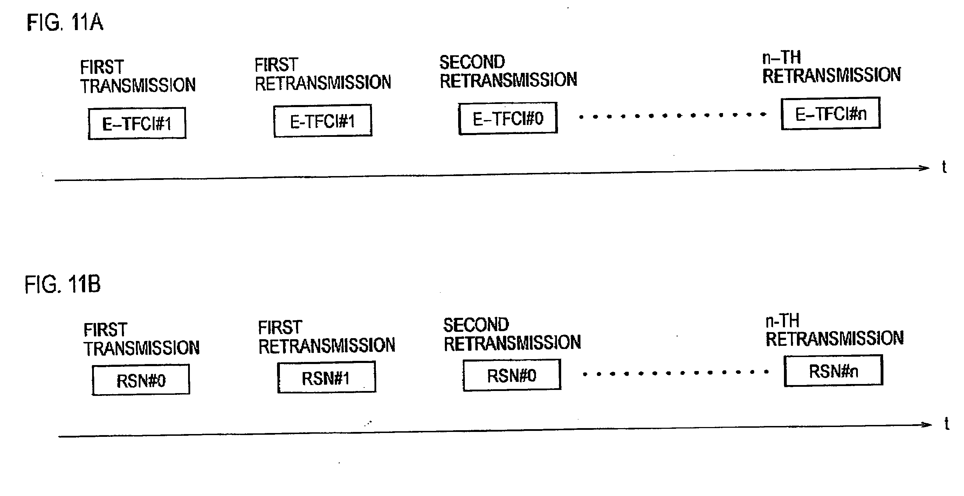

Fig. 11A shows an example of E-TFCIs which the radio base station 100 sequentially receives. As shown in Fig, 11A, the radio base station 100 receives an E-TFCI having the same value (#1) consecutively in the first transmission and the first retransmission in response to a HARQ.

If having received an E-TFCI having the same value for two consecutive times (YES in step S220), the radio base station 100 identifies the value (#1) being the same in the E-TFCIs consecutively received, as the value of the E-TFCI transmitted from the mobile device 200.

In step S240, the radio base station 100 decodes the E-DPDCH by using the identified E-TFCI value (#1). Specifically, the radio base station 100 decodes the data received through the E-DPDCH, by using the E-TFCI value (#1) received in the first transmission and the first retransmission, without referring to E-TFCI values received in the second retransmission or the n-th retransmission (see Fig. 11A).

In step S250, in response to the identification of the E-TFCI value, the radio base station 100 changes the number of code-word replicas 31 for the E-DPCCH from 1024 ($2^{10}$) to 8 ($2^3$).

In step S260, in response to the identification of the E-TFCI value, the radio base station 100 reduces the threshold value ($FA_{threshold}$) of the desired signal-to-interference power ratio for the E-DPCCH.

<u>(3.3.2) RSN</u>

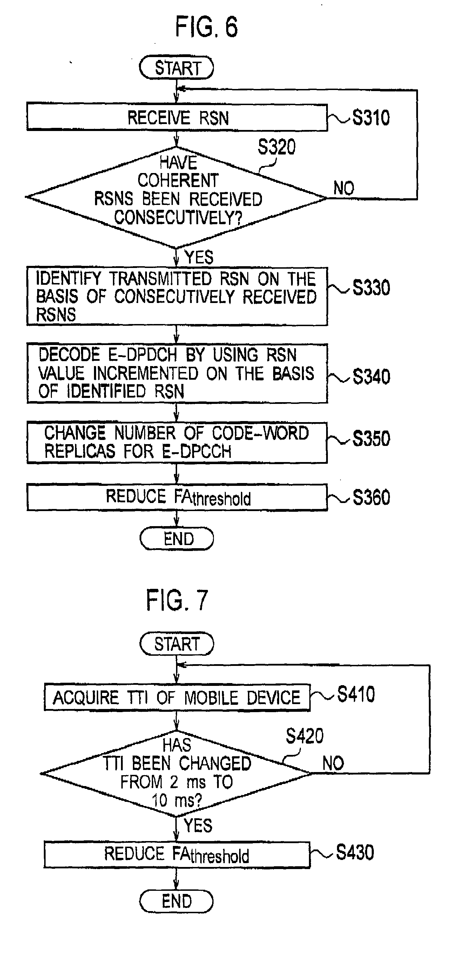

Fig. 6 shows an operation flow for changing the number of code-word replicas when the radio base station 100 identifies RSNs.

As shown in Fig. 6, in step S310, the radio base station 100 receives the RSN 12 (see Fig. 9) through the E-DPCCH.

In step S320, the radio base station 100 determines whether or not coherent RSNs have been consecutively received.

Fig. 11B shows an example of RSNs which the radio base station 100 sequentially receives. As shown in Fig. 11B, the radio base station 100 receives coherent RSNs consecutively in the first transmission and the first retransmission. Specifically, the radio base station 100 receives a RSN having a value #0 in the first transmission, and then receives a RSN having a value #1 in the first retransmission.

If coherent RSNs have been consecutively received (YES in step S320), in step S330, the radio base station 100 identifies RSN values on the basis of the consecutively received RSNs. Specifically, the radio base station 100 identifies coherent RSN values consecutively received, as the values of the RSNs transmitted from the mobile device 200.

In step S340, the radio base station 100 decodes data subsequently received through the E-DPDCH by incrementing the identified RSN value to obtain the RSN value for the data.

In step S350, in response to the identification of the RSN value, the radio base station 100 changes the number of code-word replicas 31 for the E-DPCCH from 1024 ($2^{10}$) to 256 ($2^8$).

In step S360, in response to the identification of the RSN value, the radio base station 100 reduces the threshold value (FA$_{threshold}$) of the desired signal-to-interference power ratio for the E-DPCCH.

(3.4) Operation of Changing Threshold Value of Desired Signal-to-Interference Power Ratio

Fig. 7 shows an operation flow in which the radio base station 100 changes a threshold value (FA$_{threshold}$) of the desired signal-to-interference power ratio for the E-DPCCH.

As shown in Fig. 7, in step S410, the radio base station 100 acquires a TTI of the mobile device 200.

In step S420, the radio base station 100 determines whether or not the TTI of the mobile device 200 has been changed from 2 ms to 10 ms.

If the TTI of the mobile device 200 has been changed from 2 ms to 10 ms (YES in step S420), the radio base station 100 reduces the threshold value (FA$_{threshold}$) of the desired signal-to-interference power ratio for the E-DPCCH, in step S430.

Here, the radio base station 100 may raise the threshold value once reduced, if the TTI of the mobile device 200 is changed from 10 ms to 2 ms after the execution of the process in step S430,

(4) Advantageous Effects

With the radio base station 100, the number of the code-word replicas 31 is reduced when control information, specifically, a value of the RSN 12 or the E-TFCI 13 is identified by the identification unit 121. A reduction in the number of the code-word replicas 31 allows the radio base station 100 to determine the content of the transmitted bit string (code word) from among a smaller number of the code-word replicas 31. Accordingly, the E-DPCCH can be detected more accurately. In other words, with the radio base station 100, the number of retransmission times in response to a HARQ can be reduced, and data transmission efficiencies of the physical channels can thus be enhanced.

In this embodiment, if the values of the E-TFCIs 13 are consecutively the same, the identification unit 121 identifies that the value of the E-TFCIs 13, which has been consecutively the same, as the E-TFCI transmitted from the mobile device 200. Alternatively, if the values of the RSNs 12 are consecutively coherent, the identification unit 121 identifies that the value of the RSN 12, which is coherent with the value of the RSN 12 consecutively received, as the RSN transmitted from the mobile device 200. When the E-TFCI or RSN is identified, the number of the code-word replicas 31 is reduced, and the E-DPCCH can be detected more accurately as described above. Thus, the number of retransmission times in response to a HARQ is reduced; thereby, data transmission efficiencies of the physical channels can be further enhanced.

In this embodiment, the code-word replica generator 109 can control the number of the code-word replicas 31 on the basis of the transmission format information acquired by the minimum SF/maximum multiplexed-code number/TTI length detector 107. Thus, the radio base station 100 can detect the E-DPCCH more accurately by setting the number of code-word replicas 31 corresponding to the transmission format information (for example, the maximum number of multiplexed E-DPDCH codes).

In this embodiment, when the number of code-word replicas 31 is reduced, the FA-threshold controller 123 reduces the threshold value of the desired signal-to-interference power ratio (false alarm threshold) of the E-DPCCH. When the threshold value is reduced, the radio base station 100 becomes capable of receiving physical channels which the radio base station 100 has not been able to receive with the threshold value before change. In addition, since the number of code-word replicas 31 for the E-DPCCH is reduced, the radio base station 100 becomes capable of receiving E-DPCCHs which used to result in errors (erroneous detections) before the reduction in the threshold value even if being received. Accordingly, data transmission efficiency of the physical channel (E-DPCCH) can be further enhanced.

(5) Other Embodiments

Hereinabove, the present invention has been disclosed with reference to the embodiment of the present invention as described above. However, the description and the drawings constituting parts of this disclosure are not intended to limit the invention. Various alternative embodiments will be obvious to those skilled in the art, on the basis of this disclosure.

For example, in the above-described embodiment of the present invention, when having received an E-TFCI having the same value for two consecutive times, the radio base station 100 identifies that the value of the E-TFCI, which has been consecutively the same, as the value of the E-TFCI transmitted from the mobile device 200. However, the identification of the value of the E-TFCI is not limited to the case in which an E-TFCI having the same value has been received for two consecutive times. The identification of the value of the E-TFCI may be made when an E-TFCI having the same value has been received for three consecutive times, for example.

In the above-described embodiment, the threshold value ($FA_{threshold}$) of the desired signal-to-interference power ratio is reduced in response to identification of a RSN or E-TFCI value. However, the threshold value does not have to be changed.

Hence, it is obvious that the present invention includes various embodiments and the like not described herein. Accordingly, the technical scope of the present invention should only be defined by the claimed elements according to the scope of the claims reasonably understood from the above description.

Note that the entire contents of the Japanese Patent Application No. 200.7-230661, filed on September 5, 2007, are incorporated herein by reference.

**Claims**

1. A radio base station which is included in a radio communication system using a code division multiple access scheme, and which receives a control information piece from a mobile device through an uplink physical control channel, the radio base station comprising:

    a correlation determination unit configured to determine a degree of correlation between a code word transmitted from the mobile device through the physical control channel and replicas of the code word, and then to select the replica determined to have a higher degree of correlation than a predetermined degree;
    an identification unit configured to identify the control information piece contained in the replica selected by the correlation determination unit; and
    a code-word replica controller configured to reduce the number of the replicas when the control information piece is identified by the identification unit.

2. The radio base station according to claim 1, wherein, when control information pieces contained in the replicas sequentially selected by the correlation determination unit are the same, the identification unit identifies the control information pieces, which have been consecutively the same, as the control information piece transmitted from the mobile device.

3. The radio base station according to claim 1, wherein, when control information pieces contained in the replicas sequentially selected by the correlation determination unit are coherent, the identification unit identifies the control information pieces, which have been consecutively coherent, as the control information pieces transmitted from the mobile device.

4. The radio base station according to claim 1, wherein the code-word replica controller reduces the number of the replicas on the basis of the number of bits of the control information piece identified by the identification unit.

5. The radio base station according to claim 1, further comprising an acquiring unit configured to acquire a transmission format information piece defining a transmission format of the mobile device, wherein
the code-word replica controller controls the number of the replicas on the basis of the transmission format information piece acquired by the acquiring unit.

6. The radio base station according to claim 5, wherein
the transmission format information piece contains a minimum spreading factor and a maximum number of multiplexed codes of the code word in an uplink physical data channel, and the code-word replica controller controls the number of the replicas on the basis of a combination of the minimum spreading factor and the maximum number of multiplexed codes.

7. The radio base station according to claim 6, wherein
the transmission format information piece further contains a transmission time interval of data transmitted by the mobile device, and
the code-word replica controller controls the number of the replicas on the basis of a combination of the minimum spreading factor, the maximum number of multiplexed codes, and the transmission time interval.

8. The radio base station according to claim 5, wherein the acquiring unit acquires the transmission format information piece from a radio network control apparatus configured to control the radio base station.

9. The radio base station according to claim 1, further comprising;

a power-ratio acquiring unit configured to acquire a desired signal-to-interference power ratio of the physical control channel; and

a threshold-value controller configured to control a threshold value used for a comparison with the desired signal-to-interference power ratio, wherein,

when the number of the replicas is reduced, the threshold-value controller reduces the threshold value.

10. The radio base station according to claim 1, further comprising:

a power-ratio acquiring unit configured to acquire a desired signal-to-interference power ratio of the physical control channel; and

a threshold-value controller configured to control a threshold value used for a comparison with the desired signal-to-interference power ratio, wherein

the threshold-value controller changes the threshold value on the basis of a transmission time interval of data transmitted by the mobile device.

11. The radio base station according to claim 10, wherein, when the transmission time interval of data transmitted by the mobile device is extended, the threshold-value controller reduces the threshold value.

12. The radio base station according to claim 10, wherein, when the transmission time interval of data transmitted by the mobile device is shortened, the threshold-value controller increases the threshold value.

13. A method of receiving a physical control channel which is included in a radio communication system using a code division multiple access scheme, and which is for receiving a control information piece from a mobile device through an uplink physical control channel, the method comprising the steps of:

determining a degree of correlation between a code word transmitted from the mobile device through the physical control channel and each replica of the code word, and then selecting the replica having a higher degree of correlation than a predetermined degree;

identifying the control information piece contained in the selected replica; and,

when the control information piece is identified, reducing the number of the replicas to be used for transmission of the control information piece.

FIG. 1

FIG. 2

EP 2 034 619 A1

# FIG. 3

```
        ( START )
            │
            ▼
┌──────────────────────┐
│ RECEIVE UPLINK RADIO │ ～S10
│ SIGNAL THROUGH ANTENNA│
└──────────────────────┘
            │
            ▼
┌──────────────────────┐
│ DESPREAD E-DPCCH     │ ～S20
│ CONTAINED IN RECEIVED│
│ SIGNAL               │
└──────────────────────┘
            │
            ▼
┌──────────────────────┐
│ PERFORM RAKE COMBINING,│ ～S30
│ AND THEREBY ACQUIRE  │
│ SIGNAL Z             │
└──────────────────────┘
            │
            ▼
┌──────────────────────┐
│ ACQUIRE SIR OF E-DPCCH│ ～S40
│ BY USING Z_MAX       │
└──────────────────────┘
            │
            ▼            S50
          ◇─────────────────◇
  NO ◄────┤ FA_threshold < SIR? ├
          ◇─────────────────◇
  │              │
  │              │ YES
  ▼              ▼
┌──────────────┐  ┌──────────────────────┐
│ DETERMINE THAT│  │ DETERMINE THAT E-DCH │ ～S60
│ NO E-DCH HAS  │  │ HAS BEEN TRANSMITTED │
│ BEEN          │  └──────────────────────┘
│ TRANSMITTED   │            │
└──────────────┘            ▼
   S70              ┌──────────────────────┐
  │                 │ DETECT BIT STRING    │ ～S80
  │                 │ RECEIVED THROUGH     │
  │                 │ E-DPCCH              │
  │                 └──────────────────────┘
  │                            │
  └───────────────────────────┤
                               ▼
                            ( END )
```

# FIG. 4

START

ACQUIRE MINIMUM SF AND
MAXIMUM NUMBER OF
MULTIPLEXED E-DPDCH CODES ～S110

SET NUMBER OF REPLICAS FOR
E-DPCCH ～S120

END

# FIG. 5

START

RECEIVE E-TFCI ～S210

S220

HAS SAME
E-TFCI BEEN RECEIVED
CONSECUTIVELY? NO

YES

IDENTIFY CONSECUTIVELY RECEIVED
E-TFCI AS TRANSMITTED E-TFCI ～S230

DECODE E-DPDCH BY USING
IDENTIFIED E-TFCI ～S240

CHANGE NUMBER OF CODE-WORD
REPLICAS FOR E-DPCCH ～S250

REDUCE FAthreshold ～S260

END

## FIG. 6

START

RECEIVE RSN — S310

HAVE COHERENT RSNS BEEN RECEIVED CONSECUTIVELY? — S320
NO

YES

IDENTIFY TRANSMITTED RSN ON THE BASIS OF CONSECUTIVELY RECEIVED RSNS — S330

DECODE E-DPDCH BY USING RSN VALUE INCREMENTED ON THE BASIS OF IDENTIFIED RSN — S340

CHANGE NUMBER OF CODE-WORD REPLICAS FOR E-DPCCH — S350

REDUCE FAthreshold — S360

END

## FIG. 7

START

ACQUIRE TTI OF MOBILE DEVICE — S410

HAS TTI BEEN CHANGED FROM 2 ms TO 10 ms? — S420
NO

YES

REDUCE FAthreshold — S430

END

# FIG. 8

E-DPDCH

| Data, $N_{data}$ bits |
|---|

$T_{slot} = 2580$ chips, $N_{data} = 10^x 2^k$ bits $(k = 0...7)$

E-DPCCH

| 10 bits |
|---|

$T_{slot} = 2560$ chips

| Slot #0 | Slot #1 | Slot #2 | | Slot #i | | Slot #14 |
|---|---|---|---|---|---|---|

1 subframe = 2ms

1 radio frame, $T_f = 10$ms

EP 2 034 619 A1

## FIG. 9

EP 2 034 619 A1

FIG.10A

FIG.10B

FIG.10C

B11

{SF2, 4}

REPLICAS = 128

7bits

B12

{SF2, 2}

REPLICAS = 64

6bits

B13

{SF4, 2}

REPLICAS = 32

5bits

FIG. 11A

| FIRST<br>TRANSMISSION | FIRST<br>RETRANSMISSION | SECOND<br>RETRANSMISSION | | n-TH<br>RETRANSMISSION |

| E-TFCI#1 | E-TFCI#1 | E-TFCI#0 | ··············· | E-TFCI#n |

→ t

FIG. 11B

| FIRST<br>TRANSMISSION | FIRST<br>RETRANSMISSION | SECOND<br>RETRANSMISSION | | n-TH<br>RETRANSMISSION |

| RSN#0 | RSN#1 | RSN#0 | ··············· | RSN#n |

→ t

Europäisches
Patentamt
European
Patent Office
Office européen
des brevets

**EUROPEAN SEARCH REPORT**

Application Number

EP 08 01 5698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/036104 A1 (BACHL RAINER [DE] ET AL) 15 February 2007 (2007-02-15) * paragraphs [0007] - [0018], [0027], [0038] - [0049]; figures 3,4 * ----- | 1-13 | INV. H04B1/707 H04L1/00 |
| X | WO 2006/105018 A (LUCENT TECHNOLOGIES INC [US]; BACHL RAINER WALTER [DE]; DERRIENNIC FLO) 5 October 2006 (2006-10-05) * page 1, line 23 - page 6, line 21 * * page 9, line 2 - page 10, line 29; figures 1-3 * ----- | 1-13 | |
| | | | **TECHNICAL FIELDS SEARCHED (IPC)** H04B H04L |

The present search report has been drawn up for all claims

| Place of search | Date of completion of the search | Examiner |
|---|---|---|
| The Hague | 23 December 2008 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 5698

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2008

| Patent document cited in search report | Publication date | Patent family member(s) | Publication date |
|---|---|---|---|
| US 2007036104 A1 | 15-02-2007 | CN 101300769 A<br>EP 1913722 A1<br>KR 20080035528 A<br>WO 2007021481 A1 | 05-11-2008<br>23-04-2008<br>23-04-2008<br>22-02-2007 |
| WO 2006105018 A | 05-10-2006 | EP 1864419 A1<br>JP 2008535393 T<br>KR 20080002781 A<br>US 2006221907 A1 | 12-12-2007<br>28-08-2008<br>04-01-2008<br>05-10-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007230661 B